# EUROPÄISCHE PATENTSCHRIFT

(11) **EP 3 572 170 B1**
(45) Veröffentlichungstag und Bekanntmachung des Hinweises auf die Patenterteilung: **21.01.2026**
(21) Anmeldenummer: 19168598.1
(22) Anmeldetag: 11.04.2019
(51) Int. Cl.: B22F 1/052, B22F 1/06, B22F 1/102, B22F 1/14, B22F 8/00, B22F 9/04, C22C 1/04, C22C 33/02

(54) **VERFAHREN ZUR HERSTELLUNG EINES AUSGANGSMATERIALS FÜR DIE HERSTELLUNG VON SELTENERD-MAGNETEN**
METHOD FOR THE MANUFACTURE OF AN INPUT MATERIAL FOR THE PRODUCTION OF RARE EARTH MAGNETS
PROCÉDÉ DE FABRICATION D'UN MATÉRIAU DE DÉPART POUR LA FABRICATION D'AIMANTS EN TERRES RARES

(30) Priorität: 24.05.2018 DE 102018112406
(43) Veröffentlichungstag der Anmeldung: 27.11.2019
(73) Patentinhaber: NETZSCH Trockenmahltechnik GmbH, 95100 Selb (DE)
(72) Erfinder: Winter, Frank, 63165 Mühlheim (DE); Fernengel, Wilhelm, 63801 Kleinostheim (DE)
(74) Vertreter: Benninger, Johannes

(56) Entgegenhaltungen:
- EP-A1- 2 273 513
- EP-A2- 0 414 376
- JP-A- 2000 317 338
- US-A1- 2002 129 874

## Beschreibung

Die vorliegende Erfindung betrifft ein Verfahren zur Herstellung eines Ausgangsmaterials für die Herstellung eines Seltenerd-Magneten gemäß den Merkmalen des Anspruchs 1.

### Stand der Technik

Ein Dauermagnet bzw. Permanentmagnet ist ein Stück eines magnetisierbaren Materials, zum Beispiel Eisen, Kobalt oder Nickel, welches ein statisches Magnetfeld behält, ohne dass im Gegensatz zu Elektromagneten ein elektrischer Stromfluss benötigt wird. Ein Dauermagnet kann durch die Einwirkung eines Magnetfeldes auf ferromagnetisches Material erzeugt werden.

Unter dem Namen Seltenerd-Magnet wird eine Gruppe von Permanentmagneten zusammengefasst, die im Wesentlichen aus Eisenmetallen (Eisen, Cobald, seltener Nickel) und Seltenerd-Metallen (insbesondere Neodym, Samarium, Praseodym, Dysprosium, Terbium, Gadolinium) bestehen. Seltenerd-Magneten zeichnen sich dadurch aus, dass sie eine hohe magnetische Remanenzflussdichte und damit eine hohe magnetische Energiedichte aufweisen.

Zur Herstellung eines Ausgangsmaterials, welches zur Fertigung von Permanentmagneten, insbesondere von Nd-Fe-B (Neodym-Eisen-Bohr) Magneten, benötigt wird, ist im Stand der Technik bekannt, Seltenerdmetall umfassende Legierungen zu einem pulverförmigen Zwischenprodukt, beispielsweise in Form von Grobpulver oder Feinpulver, herzustellen. Zur Herstellung von pulverförmigen Zwischenprodukten eignen sich in der Regel die herkömmlichen Zerkleinerungstechniken.

Für die Grobzerkleinerung bzw. zur Herstellung von Grobpulver mit einer Partikelgröße von circa 100 µm bis 300 µm, werden beispielsweise mechanische Zerkleinerungsanlagen und/oder die Wasserstofftechnologie eingesetzt.

Für die Feinmahlung bzw. zur Herstellung von Feinpulver mit einer Partikelgröße von circa 0,1 µm bis 20 µm werden Mahlanlagen zur Feinmahlung, wie beispielsweise Fließbettstrahlmühlen oder ähnliche Mahlanlagen eingesetzt, die unter Schutzgas betrieben werden. Bei dem verwendeten Schutzgas handelt es sich für gewöhnlich um Stickstoff oder Argon.

Da das Vorkommen von Seltenerdmetallen begrenzt ist, gewinnen neben Seltenerdmetall umfassende Legierungen zur Herstellung eines Ausgangsmaterials für die Fertigung von Seltenerd-Magneten auch Altmagnete zunehmend an Bedeutung, welche für die Herstellung eines Ausgangsmaterials für die Fertigung von Seltenerd-Magneten wiederverwendet und/oder recycelt werden. Bei den Altmagneten handelt es sich beispielsweise um Altmagnete, welche in Motoren oder in Elektroaltgeräte oder dergleichen eingesetzt wurden und nicht mehr benötigt werden bzw. und welche ihre gewünschten Eigenschaften und/oder gewünschte Leistungsstärke nicht und/oder nicht mehr vollständig erfüllen. Insofern spricht man bei der Verwendung von Altmagneten auch von einem Recycling-Material.

Im Gegensatz zu Seltenerdmetall umfassende Legierungen weist ein Altmagnet bzw. ein solches Recycling-Material eine höhere Konzentration an unerwünschten Verunreinigungen auf. Bei diesen Verunreinigungen handelt es sich meist um nichtmetallische Verunreinigungen, wie beispielsweise Sauerstoff, Stickstoff und Kohlenstoff, welche im Material umschlossen und/oder aufgrund ihrer Reaktion mit der Umgebung sowie aufgrund vorheriger Herstellungsprozesse oder dergleichen aufgenommen wurden.

Damit weisen auch die durch den Zerkleinerungsprozess aus Altmagnet bzw. Recycling-Material hergestellte Ausgangsmaterialien für die Fertigung von Seltenerd-Magneten unerwünschte Verunreinigungen, wie beispielsweise Sauerstoff, Stickstoff, Kohlenstoff und deren Verbindungen auf, durch welche die Eigenschaften der aus dem Ausgangsmaterial hergestellten Seltenerd-Magnete beispielsweise hinsichtlich der erreichbaren Magnetstärke (Remanenz) sowie der Gegenfeldstabilität erheblich beeinträchtigt werden. Auch tragen die Verunreinigungen zu einem erheblich schlechten Korrosionsverhalten bei, beispielsweise bei Nässe und in feuchter Luft.

Um die unerwünschten Verunreinigungen zu verringern und einen Seltenerdmagneten mit gewünschten Eigenschaften herzustellen, ist es daher im Stand der Technik bekannt, aus Altmagnete hergestellte Pulver mit Pulver aus Seltenerdmetall umfassende Legierungen zu kombinieren.

Durch die WO 2014/205002 A2 ist ein Verfahren zur Recycling von Altmagneten zur Herstellung von Seltenerd-Magneten, insbesondere von Nd-Fe-B Magneten, bekannt, bei welchem in zahlreichen Verfahrensschritten zunächst eine Vorbehandlung des zu recycelnden Altmagneten, wie beispielsweise Entmagnetisierung sowie Temperaturbeaufschlagung (Erwärmen und Abkühlen) erfolgt. Nach Abschluss der Vorbereitung erfolgt das Zerkleinern des vorbehandelten Altmagneten in ein Pulver und ein anschließendes Mischen des hergestellten Pulvers mit dem Pulver eines Seltenerdmetalls zu einer homogenen Mischung, welche das Ausgangsmaterial für die Fertigung von Seltenerd-Magneten darstellt.

Da zur Herstellung eines Ausgangsmaterials für die Fertigung von Seltenerd-Magneten mit gewünschten Eigenschaften neben Altmagneten auch eine Seltenerdmetall umfassende Legierung erforderlich ist, ist das durch die WO-Schrift beschriebene Verfahren zur Herstellung von Ausgangsmaterialien für die Fertigung Seltenerd-Magneten kostspielig. Auch besteht hier erneut eine Abhängigkeit von Seltenerdmetall umfassende Legierungen, welche in der Regel rar und teuer sind.

Die EP 2 273 513 A1 offenbart ein Verfahren zur Herstellung eines R-T-B gesinterten Magneten. Hierfür wird in der EP-Schrift eine Metalllegierung als Ausgangsmaterial bereitgestellt, welche anschließend unter Hinzugabe von Wasserstoff grob pulverisiert werden kann. Das pulverisierte Material wird einem Klassierer zugeführt, welcher eine Grobfraktion und eine Feinfraktion voneinander trennt und die Grobfraktion sodann mehrmals zerkleinert, bis eine gewünschte Partikelgröße erreicht ist.

Durch die WO 2014/154517 A1 ist ein Verfahren zur Abtrennung von Seltenerdmetallpartikeln aus einem Seltenerdmetall enthaltenden Gemenge bekannt. Zur Ausbildung eines Seltenerdmetallpartikel enthaltenden Partikelgemisches wird das Seltenerdmetall enthaltende Gemenge zunächst zerkleinert. Anschließend erfolgen wenigstens eine Maßnahme zur Entmagnetisierung der Seltenerdmetallpartikel in dem Partikelgemisch und ein Abtrennen der entmagnetisierten Seltenerdmetallpartikel aus dem Partikelgemisch. Die Entmagnetisierung und die anschließende Magnetisierung der Seltenerdmetallpartikel sowie das Abtrennen der entmagnetisierten Seltenerdmetallpartikel erfordern zahlreiche komplexe Verfahrensschritte, welche sich im Stand der Technik und in der Praxis als nachteilig und aufwändig erwiesen haben.

Durch die WO 2014/033004 A1 ist ein Verfahren zur Wiedergewinnung von Neodymoxid aus einem Ausgangsgemisch, insbesondere Schrott, offenbart. Nach Vorzerkleinerung des zu recycelnden Ausgangsgemisches erfolgt ein hydrometallurgischer Aufschluss unter Zugabe von Säure, während gleichzeitig der freigesetzte Wasserstoffvolumenstrom bestimmt wird. Für die Anreicherung der Neodymkonzentration einer Neodym enthaltenden Fraktion kann vor der Durchführung des hydrometallurgischen Aufschlusses eine Klassierung von Teilen des Ausgangsgemischs durchgeführt werden, wodurch die Abtrennung kleinerer, relativ isotroper Nd-Fe-B Fragmente von größeren Teilen, die im Ausgangsgemisch vorkommen, getrennt werden. Wahlweise kann auch mindestens eine Magnetscheidung durchgeführt werden, um alle ferro- sowie ferrimagnetische Materialien abzutrennen.

Die in der WO-Anmeldung offenbarte Lösung hat sich jedoch dahingehend als nachteilig erwiesen, da die Hinzugabe von Säure und/oder weiteren Flüssigkeiten/Chemikalien und/oder Salze oder dergleichen sowie das Zuführen von Temperatur erforderlich sind, wodurch sich das Verfahren als aufwändig, kompliziert und als kostspielig erwiesen hat.

### Beschreibung

Der Erfindung liegt die Aufgabe zugrunde, ein Verfahren zur Herstellung eines Ausgangsmaterials für die Fertigung von Seltenerd-Magneten zur Verfügung zu stellen, durch welches die im pulverförmigen Zwischenprodukt umfassenden Verunreinigungen zumindest weitgehend auf einfache Art und Weise verringert und/oder reduziert werden sowie durch welches ein optimiertes Ausgangsmaterial zur Herstellung von verbesserten Seltenerd-Magneten bereitgestellt wird. Gleichzeitig soll das Verfahren zur Herstellung eines pulverförmigen Ausgangsmaterials zur Herstellung von Seltenerd-Magneten optimiert werden. Weiter wird eine Anlage zur Herstellung eines Ausgangsmaterials für die Fertigung von Seltenerd-Magneten vorgesehen, mittels welcher das Verfahren zur Herstellung eines Ausgangsmaterials für die Herstellung eines Seltenerd-Magneten auf einfache Art und Weise durchgeführt werden kann.

Die Aufgabe wird durch ein Verfahren mit den Merkmalen im Anspruchs 1 gelöst. Weitere vorteilhafte Ausgestaltungen und Weiterbildungen der Erfindung sind in den jeweils abhängigen Ansprüchen angegeben.

Zur Lösung der genannten Aufgaben schlägt die Erfindung ein Verfahren zur Herstellung eines pulverförmigen und zur Fertigung von Seltenerd-Magneten vorgesehenen Ausgangsmaterials vor.

In einem ersten Schritt wird mindestens ein magnetisches Material und/oder mindestens eine Seltenerdmetall umfassende Legierung bereitgestellt, welche jeweils eine geringe, insbesondere eine unerwünschte, aber nicht zu vermeidende und nicht zu vernachlässigende, Konzentration an Verunreinigungen umfassen. Bei dem mindestens einen magnetischen Material handelt es sich vorzugsweise um einen Altmagnet oder Altmagneten, welcher/welche beispielsweise in Motoren und/oder in Elektroaltgeräte eingesetzt wurde(n) und dort jeweils für eine weitere Verwendung keinen Nutzen mehr hat/haben. Vorzugsweise handelt es sich bei dem mindestens einen magnetischen Material bzw. dem Altmagneten um einen Nd-Fe-B (Neodym-Eisen-Bohr) Magnet. Bei den Verunreinigungen kann es sich beispielsweise um Sauerstoff, Kohlenstoff und/oder Stickstoff, Sauerstoff-, Kohlenstoff- und/oder Stickstoff- enthaltende Verbindungen oder dergleichen Verunreinigungen handeln, welche in den jeweils bereitgestellten Materialien enthalten sind. Häufige Verunreinigungen werden durch Verbindungen von Sauerstoff, Kohlenstoff und/oder Stickstoff mit Neodym gebildet, beispielsweise ist in gesinterten Magneten der Sauerstoff gewöhnlich in Form von Neodymoxid Nd₂O₃ gebunden, der Stickstoff in Form von Neodymnitrid NNd und der Kohlenstoff in Form von Neodym - Karbid, NdₓC_{y}. Weiterhin können Sauerstoff- Stickstoffhaltige Verunreinigungen beispielsweise in Form von Neodym-III-nitrat Nd(NO₃)₃ enthalten sein. Weiterhin wären auch Verunreinigungen durch Wasserstoff, Wasserstoff- haltige Verbindungen oder dergleichen denkbar. Die geringe Konzentration an Verunreinigungen im bereitgestellten mindestens einen magnetischen Material und/oder in der bereitgestellten mindestens einen Seltenerdmetall umfassenden Legierung kann zwischen mindestens 0,01 Gewichtsprozent und höchstens 1,5 Gewichtsprozent liegen.

Die Konzentration an Verunreinigungen von Sauerstoff im pulverförmigen Zwischenprodukt liegt insbesondere zwischen 0,1 Gewichtsprozent und 1,2 Gewichtsprozent, die Verunreinigung von Stickstoff liegt insbesondere zwischen 0,01 Gewichtsprozent und 0,15 Gewichtsprozent und die von Kohlenstoff liegtinsbesondere zwischen 0,01 Gewichtsprozent und 0,20 Gewichtsprozent liegen.

In einem nächsten Schritt erfolgt ein Zerkleinern des bereitgestellten mindestens einen magnetischen Materials und/oder der bereitgestellten mindestens einen Seltenerdmetall umfassenden Legierung, wobei aus dem mindestens einen magnetischen Material und/oder aus der mindestens einen Seltenerdmetall umfassenden Legierung ein pulverförmiges Zwischenprodukt entsteht, welches unter Umständen auch eine erhöhte Konzentration an Verunreinigungen als das bereitgestellte mindestens eine magnetische Material und/oder als die bereitgestellte mindestens eine Seltenerdmetall umfassende Legierung enthalten kann. Die erhöhe Konzentration an Verunreinigungen im pulverförmigen Zwischenprodukt kann vorzugsweise zwischen mindestens 0,01 Gewichtsprozent und höchstens 2,0 Gewichtsprozent liegen.

Durch das Zerkleinern des mindestens einen magnetischen Materials und/oder der mindestens einen Seltenerdmetall umfassenden Legierung können Verunreinigungen, wie Sauerstoff, Kohlenstoff, Stickstoff und/oder Wasserstoff oder entsprechende Sauerstoff-, Kohlenstoff-, Stickstoff- und/oder Wasserstoffenthaltende Verbindungen etc. vom zu zerkleinernden Material aus der Umgebung zusätzlich aufgenommen werden, was einen Anstieg der Konzentration an Verunreinigungen im pulverförmigen Zwischenprodukt gegenüber dem bereitgestellten mindestens einen magnetischen Material und/oder der mindestens einen Seltenerdmetall umfassenden Legierung bewirkt.

In einem weiteren Schritt erfolgt ein Klassieren des pulverförmigen Zwischenprodukts auf mindestens ein Kriterium, wobei zur Klassierung des pulverförmigen Zwischenprodukts mit Verunreinigungen mindestens ein dynamischer Sichter vorgesehen ist, welcher das pulverförmige Zwischenprodukt mit Verunreinigungen anhand des mindestens einen Kriteriums in mindestens zwei Fraktionen unterteilt, wobei sich in einer ersten Fraktion wenigstens eine hohe Konzentration an Verunreinigungen und sich in einer zweiten Fraktion keine Verunreinigungen oder zumindest eine geringere Konzentration an Verunreinigungen als bei der ersten Fraktion anreichern. Das Klassieren des pulverförmigen Zwischenprodukts kann zwar dazu führen, dass die Konzentration an Verunreinigungen insgesamt ansteigt, jedoch kann über das Klassieren in die mindestens zwei Fraktionen der Anteil an Verunreinigungen derart getrennt werden, dass der Anteil an aufgenommenen Verunreinigungen und die sonstigen im jeweiligen pulverförmigen Zwischenprodukt aufgenommenen Verunreinigungen über die mindestens zwei Fraktionen aussortiert werden können.

Die Konzentration an Verunreinigungen in der ersten Fraktion liegt zwischen mindestens 0,02 Gewichtsprozent und höchstens 10,0 Gewichtsprozent. Gemäß einem Ausführungsbeispiel kann beispielsweise die Konzentration an Verunreinigungen von Sauerstoff insbesondere zwischen 0,5 Gewichtsprozent und 8,0 Gewichtsprozent, von Stickstoff insbesondere zwischen 0,05 Gewichtsprozent und 0,35 Gewichtsprozent und von Kohlenstoff insbesondere zwischen 0,05 Gewichtsprozent und 0,35 Gewichtsprozent liegen.

Die Konzentration an Verunreinigungen in der zweiten Fraktion liegt bei maximal 1,0 Gewichtsprozent. Gemäß einem Ausführungsbeispiel kann beispielsweise der Anteil an Verunreinigungen in der zweiten Fraktion von Sauerstoff bei größer als 0.01 Gewichtsprozent oder kleiner als maximal 0,2 Gewichtsprozent, von Stickstoff bei größer als 0.01 Gewichtsprozent oder kleiner als maximal 0,05 Gewichtsprozent und von Kohlenstoff bei größer als 0.01 Gewichtsprozent oder kleiner als maximal 0,05 Gewichtsprozent liegen/sein.

Die Fraktion, insbesondere die zweite Fraktion, ohne Verunreinigungen oder mit der geringen Konzentration an Verunreinigungen bildet das Ausgangsmaterial zur Fertigung und/oder Herstellung von Seltenerd-Magneten.

Das Klassieren des pulverförmigen Zwischenprodukts durch den dynamischen Sichter in mindestens zwei Fraktionen kann auch als dynamischer Sichterprozess bezeichnet werden.

Es kann vorgesehen sein, dass das mindestens eine Kriterium durch die physikalische Eigenschaft der Partikelgröße oder dergleichen definiert ist. Wahlweise können sich sämtliche weitere Kriterien wie beispielsweise Partikeldichte zur Klassierung des pulverförmigen Zwischenprodukts in mindestens zwei Fraktionen eignen.

Gemäß bevorzugten Ausführungsbeispielen der Erfindung werden die erste Fraktion mit einer hohen Konzentration an Verunreinigungen durch eine kleine Partikelgröße und die zweite Fraktion ohne Verunreinigungen oder mit einer geringen Konzentration an Verunreinigungen durch eine größere Partikelgröße als bei der ersten Fraktion gebildet.

Weiter kann das pulverförmige Zwischenprodukt, insbesondere jeweils die zweite Fraktion ohne Verunreinigungen oder mit der geringen Konzentration an Verunreinigungen mehrmals durch den dynamischen Sichter klassiert und in mindestens zwei Fraktionen unterteilt werden. Auf diese Weise können die im pulverförmigen Zwischenprodukt vorhandenen Verunreinigungen sukzessive über die mindestens zwei Fraktionen aussortiert und damit verringert werden, um ein Ausgangsmaterial für die Fertigung von Seltenerd-Magneten ohne Verunreinigungen oder mit einer möglichst geringen Konzentration an Verunreinigungen bereitzustellen. Auch kann durch die mehrmaligen Sichterprozesse ein homogenes Material, beispielsweise in Bezug auf die Partikelgröße, gewonnen werden. Das Klassieren durch den dynamischen Sichter kann beliebig oft wiederholt werden, wobei sich dadurch ein zumindest weitgehend homogenes Ausgangsmaterial zur Fertigung von Seltenerd-Magneten herstellen lässt.

Es kann vorgesehen sein, dass die Konzentration an Verunreinigungen der zweiten Fraktion gegenüber der ersten Fraktion durch Klassieren des pulverförmigen Zwischenprodukts in die mindestens zwei Fraktionen um wenigstens ein Viertel bis wenigstens ein Dreiviertel oder mehr verringert wird. Wahlweise können die Verunreinigungen vollständig aus der zweiten Fraktion herausgetrennt werden.

Je nach Ausführungsbeispiel der Erfindung kann vorgesehen sein, dass das mindestens eine magnetische Material und/oder die mindestens eine Seltenerdmetall umfassende Legierung derart zerkleinert wird, dass es sich bei dem hergestellten pulverförmigen Zwischenprodukt um ein Grobpulver oder um ein Feinpulver handelt. Insofern kann zwischen einer Grobmahlung und einer Feinmahlung unterschieden werden.

Das Zerkleinern des mindestens einen magnetischen Materials und/oder der mindestens einen Seltenerdmetall umfassenden Legierung, insbesondere in ein Grobpulver, kann durch einen Mahlvorgang oder durch mehrere Mahlvorgänge einer mechanischen Mahlanlage oder mit Hilfe der Wasserstofftechnik erfolgen, wobei die Zugabe von Wasserstoff eine Versprödung des mindestens einen magnetischen Materials und/oder der mindestens einen Seltenerdmetall umfassenden Legierung bewirken kann.

Sofern eine Grobmahlung durchgeführt wird und es sich somit bei dem pulverförmigen Zwischenprodukt um ein Grobpulver handelt, kann das Klassieren durch den dynamischen Sichter mit dem grobkörnigen pulverförmigen Zwischenprodukt durchgeführt werden, welches grobkörniges pulverförmiges Zwischenprodukt in mindestens zwei Fraktionen nach mindestens einem Kriterium unterteilt werden kann. Es kann vorgesehen sein, dass die Fraktion ohne Verunreinigungen oder mit der geringen Konzentration an Verunreinigungen nach Abschluss der Klassierung einer weiteren Zerkleinerung unterzogen wird, so dass ein Feinpulver als Ausgangsmaterial für die Herstellung des Seltenerd-Magneten hergestellt und bereitgestellt wird. Wahlweise kann das Grobpulver unmittelbar nach der Klassierung durch den dynamischen Sichter in die mindestens zwei Fraktionen als Ausgangsmaterial für die Herstellung des Seltenerd-Magneten dienen, wobei insbesondere die Fraktion ohne Verunreinigungen oder mit der geringeren Konzentration an Verunreinigungen als Ausgangsmaterial für die Fertigung des Seltenerd-Magneten dient.

Wahlweise kann zeitlich nach der Grobmahlung eine Feinmahlung durch einen Mahlvorgang oder durch mehrere Mahlvorgänge einer mechanischen Mahlanlage durchgeführt werden, so dass aus dem zuvor bereitgestellten mindestens einen magnetischen Material und/oder mindestens einer Seltenerdmetall umfassenden Legierung ein feinkörniges pulverförmiges Zwischenprodukt erzeugt wird, welches anschließend durch den dynamischen Sichter in mindestens zwei Fraktionen nach mindestens einem Kriterium klassiert wird.

Es kann vorgesehen sein, dass dem mindestens einen dynamischen Sichter Schutzgas zugeführt wird, so dass das pulverförmige Zwischenprodukt unter Schutzgasatmosphäre in mindestens zwei Fraktionen unterteilt wird. Bei dem verwendeten Schutzgas kann es sich beispielsweise um Helium, Argon, Stickstoff oder dergleichen Schutzgase handeln.

Zusätzlich kann dem mindestens einen bereitgestellten magnetischen Material und/oder der mindestens einen Seltenerdmetall umfassenden Legierung zeitlich vor oder während der Zerkleinerung wenigstens ein Hilfsstoff in festem, flüssigem oder gasförmigem Zustand zugeführt werden. Der wenigstens eine Hilfsstoff kann beispielsweise Zinkstearat, Isopropanol oder dergleichen umfassen.

Der wenigstens eine Hilfsstoff kann dazu beitragen, dass während der Zerkleinerung des bereitgestellten mindestens einen magnetischen Materials und/oder der bereitgestellten mindestens einen Seltenerdmetall umfassenden Legierung keine oder weniger Verunreinigungen von dem mindestens einen magnetischen Materials und/oder der bereitgestellten mindestens einen Seltenerdmetall umfassenden Legierung aufgenommen werden, so dass die Konzentration an Verunreinigungen gegenüber dem bereitgestellten mindestens einen magnetischen Materials und/oder der bereitgestellten mindestens einen Seltenerdmetall umfassenden Legierung nicht oder nur wesentlich ansteigt. Der wenigstens eine Hilfsstoff kann sich wie Coating bzw. wie eine Beschichtung um die einzelnen Partikel des jeweiligen Materials legen, so dass die Konzentration an Verunreinigungen im pulverförmigen Zwischenprodukt nicht oder nur geringfügig ansteigt.

Weiterhin wird eine Anlage zur Herstellung eines pulverförmigen und zur Fertigung von Seltenerd-Magneten vorgesehenen Ausgangsmaterials beschrieben, welche Anlage insbesondere zur Durchführung eines Verfahrens gemäß Anspruch 1 ausgebildet ist. Die Anlage umfasst mindestens eine Zerkleinerungseinrichtung, welches ein pulverförmiges Zwischenprodukt durch Zerkleinern mindestens eines magnetischen Materials und/oder mindestens einer Seltenerdmetall umfassenden Legierung herstellt. Bei der mindestens einen Zerkleinerungseinrichtung kann es sich um mechanische Zerkleinerungsmaschinen handeln, welche jeweils ein pulverförmiges Zwischenprodukt mit einer erhöhten Konzentration an Verunreinigungen herstellen kann. Wahlweise kann es sich bei der Zerkleinerungseinrichtung um eine Vorrichtung handeln, welche mit Hilfe der Wasserstofftechnik das bereitgestellte mindestens eine magnetische Material und/oder mindestens eine Seltenerdmetall umfassende Legierung in ein pulverförmiges Zwischenprodukt herstellen kann.

Die Anlage umfasst weiter wenigstens eine Trenneinrichtung, welche zur Klassierung des pulverförmigen Zwischenprodukts nach mindestens einem Kriterium ausgebildet ist. Die wenigstens eine Trenneinrichtung kann durch einen dynamischen Sichter ausgebildet sein, welcher das pulverförmige Zwischenprodukt mit den Verunreinigungen anhand des mindestens einen Kriteriums in mindestens zwei Fraktionen unterteilen kann, wobei eine erste Fraktion eine hohe Konzentration an Verunreinigungen und eine zweite Fraktion keine Verunreinigungen oder eine geringere Konzentration an Verunreinigungen als die erste Fraktion umfassen. Die zweite Fraktion ohne Verunreinigungen oder mit einer geringen Konzentration an Verunreinigungen bildet das Ausgangsmaterial zur Fertigung von Seltenerd-Magneten aus.

Das mindestens eine Kriterium zur Klassierung des pulverförmigen Zwischenprodukts kann die Partikelgröße, die Partikeldichte oder dergleichen des pulverförmigen Zwischenprodukts umfassen.

Gemäß einem Ausführungsbeispiel der Anlage kann die wenigstens eine Trenneinrichtung mindestens einen dynamischen Sichter umfassen, welcher in die Anlage integriert ist. Wahlweise kann die wenigstens eine Trenneinrichtung mindestens einen dynamischen Sichter umfassen, welche gegenüber der Anlage als separate Bauteilkomponente ausgebildet ist, welcher das zu sichtende pulverförmige Zwischenprodukt zugeführt wird.

Weiter kann vorgesehen sein, dass dem dynamischen Sichter mindestens ein Schutzgas zugeführt ist, so dass die auf mindestens ein Kriterium ausgerichtete Klassierung unter Schutzgasatmosphäre erfolgt. Bei dem verwendeten Schutzgas kann es sich beispielsweise um Helium, Argon, Stickstoff oder dergleichen Schutzgase handeln.

Weiter kann der mindestens einen Zerkleinerungseinrichtung mindestens ein Hilfsstoff in festem, flüssigem oder gasförmigem Zustand zugeführt werden, um unterwünschte Reaktionen des hergestellten pulverförmigen Zwischenprodukts mit der Umgebung zumindest weitgehend unterdrücken zu können.

Bei den Verunreinigungen kann es sich um nichtmetallische Stoffe, wie beispielsweise Sauerstoff, Kohlenstoff und Stickstoff und/oder deren Verbindungen handeln. Weiterhin wären auch Verunreinigungen wie Wasserstoff, dessen Verbindungen oder dergleichen Verunreinigungen denkbar.

Hinsichtlich aller oben erwähnten Aspekte und Ausführungsvarianten des erfindungsgemäßen Verfahrens zur Herstellung eines pulverförmigen und zur Fertigung von Seltenerd-Magneten vorgesehenen Ausgangsmaterials, sei an dieser Stelle darauf hingewiesen, dass diese Aspekte und Charakteristika gleichermaßen Teil der Anlage zur Herstellung eines pulverförmigen und zur Fertigung von Seltenerd-Magneten vorgesehenen Ausgangsmaterials oder Anwendung auf diese finden können. Wenn daher an irgendeiner Stelle der obigen Beschreibung von bestimmten Aspekten und Varianten des Verfahrens zur Herstellung eines pulverförmigen und zur Fertigung von Seltenerd-Magneten vorgesehenen Ausgangsmaterials die Rede ist, so sind diese Aspekte und Ausführungsvarianten gleichermaßen auf Anlage zu lesen und sollen auch in dieser Weise verstanden werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 verdeutlicht einzelne Schritte zur Umsetzung einer Ausführungsform eines erfindungsgemäßen Verfahrens.
Figur 2 zeigt die Konzentrationen an Verunreinigungen des pulverförmigen Zwischenprodukts nach einer Grobmahlung und jeweils nach zwei Sichterprozessen in einer tabellarischen Gegenüberstellung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren und die zur Ausführung des Verfahrens geeignete Anlage ausgestaltet sein können und stellen keine abschließende Begrenzung dar.

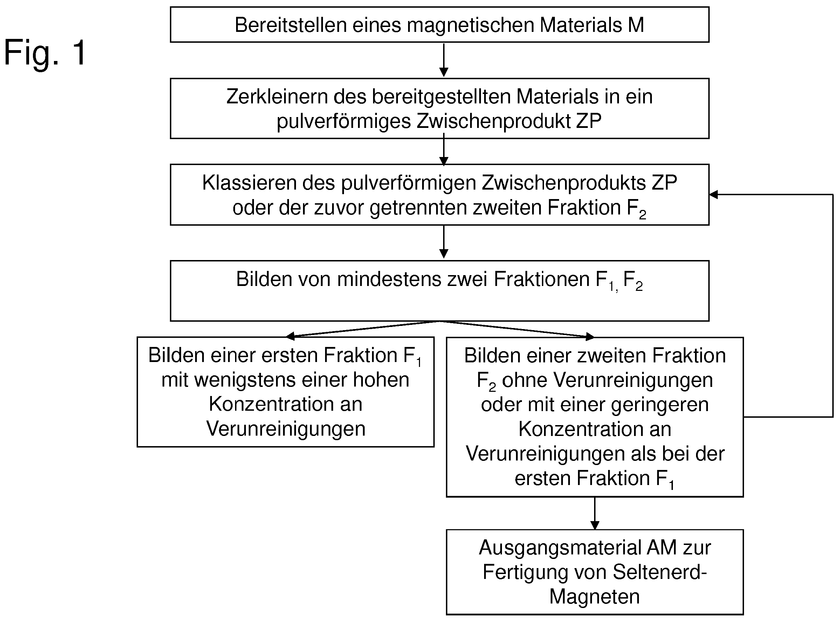

Figur 1 zeigt einzelne Verfahrensschritte zur Herstellung eines Ausgangsmaterials AM zur Fertigung von Seltenerd-Magneten, basierend auf mindestens einem magnetischen Material M.

In einem ersten Schritt wird mindestens ein magnetisches Material M bereitgestellt. Bei dem mindestens einen magnetischen Material M handelt es sich vorzugsweise um Altmagnete, insbesondere um Nd-Fe-B Altmagnete, welche in Motoren oder in Elektroaltgeräte oder dergleichen eingesetzt wurden. In der Regel umfassen derartige Altmagnete geringe, insbesondere eine ungewollte, aber nicht zu vermeidende und nicht zu vernachlässigende, Konzentration an Verunreinigungen, welche durch das jeweils magnetische Material M enthalten und/oder im jeweiligen Material eingeschlossen sind. Bei diesen Verunreinigungen handelt es sich vorzugsweise um Sauerstoff, Kohlenstoff, Stickstoff und/oder deren Verbindungen. Die geringe Konzentration an Verunreinigungen im bereitgestellten mindestens einen magnetische Material und/oder in der bereitgestellten mindestens einen Seltenerdmetall umfassenden Legierung liegt vorzugsweise zwischen mindestens 0,01 Gewichtsprozent und höchstens 1,5 Gewichtsprozent. Insbesondere kann beispielsweise die Konzentration an Verunreinigungen von Sauerstoff zwischen 0,1 Gewichtsprozent und 1,0 Gewichtsprozent, von Stickstoff zwischen 0,01 Gewichtsprozent und 0,1 Gewichtsprozent und von Kohlenstoff zwischen 0,01 Gewichtsprozent und 0,15 Gewichtsprozent liegen.

In einem nächsten Schritt wird das bereitgestellte mindestens eine magnetische Material M zerkleinert, wobei aus dem mindestens einen magnetischen Material M ein pulverförmiges Zwischenprodukt ZP entsteht, das unter Umständen auch eine erhöhte Konzentration an Verunreinigungen enthalten kann als das bereitgestellte mindestens eine magnetische Material M. Die erhöhe Konzentration an Verunreinigungen im pulverförmigen Zwischenprodukt liegt vorzugsweise zwischen mindestens 0,01 Gewichtsprozent und höchstens 2,0 Gewichtsprozent. Insbesondere kann beispielsweise die Konzentration an Verunreinigungen von Sauerstoff zwischen 0,1 Gewichtsprozent und 1,2 Gewichtsprozent, von Stickstoff zwischen 0,01 Gewichtsprozent und 0,15 Gewichtsprozent und von Kohlenstoff zwischen 0,01 Gewichtsprozent und 0,20 Gewichtsprozent liegen.

Durch das Zerkleinern des mindestens einen magnetischen Materials M nimmt dieses in der Regel zusätzliche Verunreinigungen, wie Sauerstoff, Kohlenstoff, Stickstoff und/oder deren Verbindungen aus der Umgebung auf, was einen Anstieg der Konzentration an Verunreinigungen im pulverförmigen Zwischenprodukt ZP gegenüber dem bereitgestellten mindestens einen magnetischen Material M bewirkt. Insbesondere wird vermehrt Sauerstoff aufgenommen, da durch das Zerkleinern das mindestens eine magnetische Material aufgewirbelt und innerhalb der Zerkleinerungseinrichtung herumgeschleudert wird.

Die Zerkleinerung des mindestens einen magnetischen Materials M erfolgt dabei derart, dass ein Grobpulver oder Feinpulver hergestellt wird, welches das pulverförmige Zwischenprodukt ZP ausbildet.

Zur Herstellung eines Grobpulvers eignet sich wahlweise ein Zerkleinerungsvorgang mittels einer mechanischen Zerkleinerungsanlage oder der Einsatz von Wasserstoff, welcher eine Versprödung des mindestens einen magnetischen Materials M und damit einen Zerfall des mindestens einen magnetischen Materials M in ein grobkörniges pulverförmiges Zwischenprodukt bewirkt. Durch den Einsatz von Wasserstoff weist das pulverförmigen Zwischenprodukt ZP neben Verunreinigungen wie Sauerstoff, Kohlenstoff, Stickstoff und/oder deren Verbindungen auch eine erhöhte Konzentration an Verunreinigungen an Wasserstoff und/oder Wasserstoff- haltigen Verbindungen auf.

Zur Herstellung eines feinkörnigen pulverförmigen Zwischenprodukts ZP können mehrere Zerkleinerungsvorgänge, insbesondere mehrere Mahlvorgänge und/oder eine Feinmahlung des mindestens einen magnetischen Materials M durchgeführt werden, wobei im pulverförmigen Zwischenprodukt ZP dann gewöhnlich eine erhöhte Konzentration an unerwünschten Verunreinigungen, wie Sauerstoff, Kohlenstoff, Stickstoff und/oder deren Verbindungen vorhanden ist.

Da zur Bereitstellung eines Ausgangsmaterials AM für die Fertigung eines Seltenerd-Magneten möglichst keine oder eine geringe Konzentration an Verunreinigungen im jeweiligen Ausgangsmaterial AM vorhanden sein sollen, müssen diese Verunreinigungen aus dem pulverförmigen Zwischenprodukt ZP herausgetrennt werden. Hierzu erfolgt in einem nächsten Schritt ein Klassieren des pulverförmigen Zwischenprodukts ZP auf mindestens ein Kriterium, wobei durch das Klassieren die Konzentration an Verunreinigungen unter Umständen weiter zunehmen kann. Vorzugsweise erfolgt ein erhöhter Anstieg an Sauerstoff, da das pulverförmige Zwischenprodukt ZP im Rahmen der Klassierung aufgewirbelt wird. Das mindestens eine Kriterium kann die Partikelgröße, die Partikeldichte oder dergleichen umfassen, wobei beim erfindungsgemäßen Verfahren vorzugsweise eine Klassierung des pulverförmigen Zwischenprodukts ZP nach der Partikelgröße erfolgt.

Das Klassieren des pulverförmigen Zwischenprodukts ZP erfolgt durch mindestens einen dynamischen Sichter, welcher das hergestellte pulverförmige Zwischenprodukt anhand des mindestens einen Kriteriums, insbesondere anhand der Partikelgröße, in mindestens zwei Fraktionen F₁, F₂ unterteilt, wobei sich in einer ersten Fraktion F₁ wenigstens eine hohe Konzentration an Verunreinigungen und sich in einer zweiten Fraktion F₂ keine Verunreinigungen oder zumindest eine geringere Konzentration an Verunreinigungen als bei der ersten Fraktion F₁ anreichern. Vorzugsweise wird die erste Fraktion F₁ mit einer hohen Konzentration an Verunreinigungen durch eine kleine Partikelgröße und die zweite Fraktion F₂ ohne Verunreinigungen oder mit einer geringeren Konzentration als bei der ersten Fraktion F₁ durch eine größere Partikelgröße des klassierten pulverförmigen Zwischenprodukts ZP gebildet. Die Konzentration an Verunreinigungen in der ersten Fraktion liegt zwischen mindestens 0,02 Gewichtsprozent und höchstens 10,0 Gewichtsprozent. Insbesondere kann beispielsweise die Konzentration an Verunreinigungen von Sauerstoff zwischen 0,5 Gewichtsprozent und 8,0 Gewichtsprozent, von Stickstoff zwischen 0,05 Gewichtsprozent und 0,35 Gewichtsprozent und von Kohlenstoff zwischen 0,05 Gewichtsprozent und 0,35 Gewichtsprozent liegen.

Die Konzentration an Verunreinigungen in der zweiten Fraktion liegt bei maximal 1,0 Gewichtsprozent. Insbesondere kann die Konzentration an Verunreinigungen in der zweiten Fraktion von Sauerstoff bei größer als 0.01 Gewichtsprozent oder kleiner als maximal 0,2 Gewichtsprozent, von Stickstoff bei größer als 0.01 Gewichtsprozent oder kleiner als maximal 0,05 Gewichtsprozent und von Kohlenstoff bei größer als 0.01 Gewichtsprozent oder kleiner als maximal 0,05 Gewichtsprozent liegen/sein.

Da sich in der zweiten Fraktion F₂ mit der größeren Partikelgröße keine Verunreinigungen oder lediglich eine geringe Konzentration an Verunreinigungen als bei der ersten Fraktion F₁ mit der kleineren Partikelgröße anreichert, bildet das in der zweiten Fraktion F₂ abgetrennte Material das Ausgangsmaterial AM zur Fertigung von Seltenerd-Magneten aus. Hingegen ist die erste Fraktion F₁ mit der kleineren Partikelgröße und der höheren Konzentration an Verunreinigungen für die Fertigung eines Seltenerd-Magneten uninteressant und wird nicht weiter verwendet bzw. aussortiert.

Zwar werden durch das Klassieren des pulverförmigen Zwischenprodukts ZP weitere Verunreinigungen, wie Sauerstoff, Stickstoff, Kohlenstoff und/oder deren Verbindungen aufgenommen, jedoch werden diese zusätzlich aufgenommenen Verunreinigungen und die bereits vorhandenen Verunreinigungen über das Klassieren in die mindestens zwei Fraktionen F₁, F₂ herausgetrennt und aussortiert, so dass eine zweite Fraktion F₂ ohne Verunreinigungen oder mit einer geringen Konzentration an Verunreinigungen erzeugt wird.

Sofern die zweite Fraktion F₂ nach der ersten Klassierung durch den dynamischen Sichter eine immer noch zu hohe Konzentration an Verunreinigungen umfasst, können beliebig oft und/oder mehrmals weitere dynamische Sichterprozesse durch den dynamischen Sichter durchgeführt werden, so dass ein Ausgangsmaterial AM für die Fertigung von Seltenerd-Magneten ohne oder mit einer möglichst geringen Konzentration an Verunreinigungen hergestellt und bereitgestellt werden kann. Für die weiteren Sichterprozesse wird jeweils die erste Fraktion F₁ mit der hohen Konzentration an Verunreinigungen gegenüber der zweiten Fraktion F₂ aussortiert, während jeweils die zweite Fraktion F₂ zur weiteren Klassierung in mindestens zwei weitere Fraktionen dient.

Um unerwünschte Reaktionen des pulverförmigen Zwischenprodukts ZP mit der Umgebung und/oder dergleichen zu vermeiden, kann dem dynamischen Sichter mindestens ein Schutzgas zugeführt werden, so dass das pulverförmige Zwischenprodukt ZP unter Schutzgasatmosphäre in mindestens zwei Fraktionen F₁, F₂ unterteilt wird.

Wahlweise kann dem mindestens einen magnetischen Material M mindestens ein Hilfsstoff in festem, flüssigem oder gasförmigem Zustand zugeführt werden. Bei dem mindestens einen Hilfsstoff kann es sich beispielsweise um Zinkstearat, Isopropanol oder dergleichen handeln, welches sich wie ein Coating bzw. wie eine Beschichtung um die einzelnen Partikel des jeweiligen Materials legt und damit die Aufnahme an Verunreinigungen während der Zerkleinerung des mindestens einen magnetischen Materials M in ein pulverförmiges Zwischenprodukt ZP verringert.

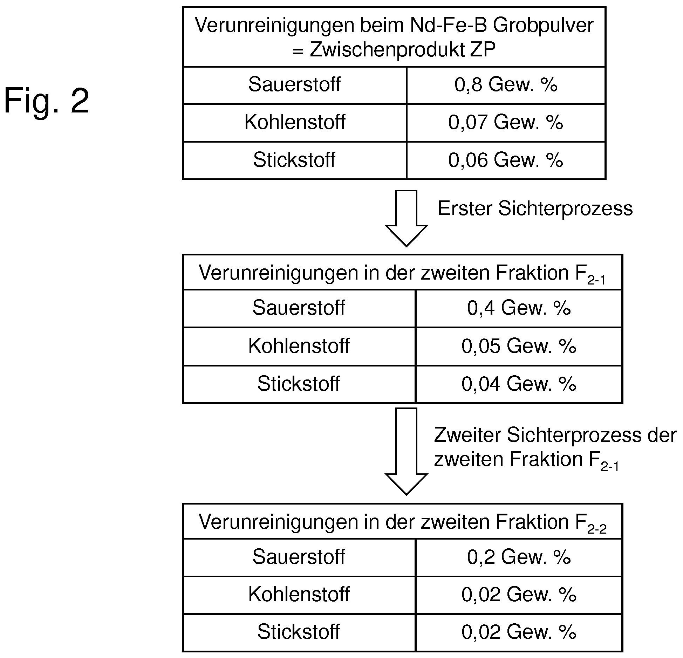

Figur 2 zeigt schematisch und in einer tabellarischen Übersicht die Konzentration nach einer Grobmahlung eines magnetischen Materials sowie nach zwei Sichterprozessen eines Ausführungsbeispiels des erfindungsgemäßen Verfahrens.

Bei vorliegendem Ausführungsbeispiel wurde aus einem magnetischen Material M, insbesondere aus einem Nd-Fe-B Altmagneten, mit Hilfe der Wasserstofftechnik ein Grobpulver erzeugt, wobei der zugeführte Wasserstoff in den bereitgestellten Nd-Fe-B Altmagneten eindringt, so dass dieser in ein Grobpulver mit einer Feinheit von Null bis etwa 300 - 3000 µm zerfällt. Bei dem hergestellten Grobpulver handelt es sich damit um das pulverförmige Zwischenprodukt ZP.

Das hergestellte grobkörnige pulverförmige Zwischenprodukt ZP umfasst Verunreinigungen wie Sauerstoff und/oder Sauerstoff- haltige Verbindungen mit beispielsweise 0,8 Gewichtsprozent Sauerstoff, Kohlenstoff und/oder Kohlenstoffhaltige Verbindungen mit beispielsweise 0,07 Gewichtsprozent Kohlenstoff sowie Stickstoff und/oder Stickstoff - haltige Verbindungen mit beispielsweise 0,06 Gewichtsprozent Stickstoff.

Um die Konzentration an Verunreinigungen im pulverförmigen Zwischenprodukt ZP des zerkleinerten Nd-Fe-B Altmagneten zu verringern, wird das pulverförmige Zwischenprodukt ZP auf mindestens ein Kriterium, insbesondere auf ihre Partikelgröße, klassiert. Zur Klassierung ist mindestens ein dynamischer Sichter vorgesehen, welcher das pulverförmige Zwischenprodukt ZP mit den Sauerstoff-, Kohlenstoff- und Stickstoff-haltigen Verunreinigungen anhand der Partikelgröße in mindestens zwei Fraktionen F₁₋₁ (nicht dargestellt), F₂₋₁ unterteilt.

Die mindestens zwei Fraktionen F₁₋₁, F₂₋₁ unterscheiden sich darin, dass sich in einer ersten Fraktion F₁₋₁ mit einer kleinen Partikelgröße wenigstens eine hohe Konzentration an Verunreinigungen und sich in einer zweiten Fraktion F₂₋₁ mit einer größeren Partikelgröße zumindest eine geringere Konzentration an Verunreinigungen als bei der ersten Fraktion F₁₋₁ anreichen.

So haben sich nach einem ersten Sichterprozess der Anteil an Sauerstoff auf 0,4 Gewichtsprozent, an Kohlenstoff auf 0,05 Gewichtsprozent und an Stickstoff auf 0,04 Gewichtsprozent verringert, wobei es sich bei diesen Angaben um die Konzentration an Verunreinigungen in der zweiten Fraktion F₂₋₁ mit der größeren Partikelgröße handelt. Die Konzentration an Verunreinigungen konnten durch den ersten Sichterprozess in der zweiten Fraktion F₂₋₁ somit um zumindest ein Viertel und um die Hälfte verringert werden.

Da sich die erste Fraktion F₁₋₁ mit der kleineren Partikelgröße mit einer gegenüber der zweiten Fraktion F₂₋₁ deutlich höheren Konzentration an Verunreinigungen auszeichnet, und damit nicht für die Fertigung von Seltenerd-Magneten relevant ist, wird auf diese nicht weiter eingegangen. Auch sei an dieser Stelle darauf hingewiesen, dass auf Wasserstoff-Verunreinigungen, welche sich durch die Grobmahlung ergeben, nicht weiter eingegangen wird.

Da für die Fertigung von Seltenerd-Magnete ein Ausgangsmaterial AM möglichst ohne oder mit einer geringen Konzentration an Verunreinigungen wünschenswert ist, erfolgt ein zweiter Sichterprozess der zuvor abgetrennten zweiten Fraktion F₂₋₁, um somit die Konzentration an Verunreinigungen weiter zu verringern.

Durch eine erneute Klassierung durch mindestens einen dynamischen Sichter wird das Material der zuvor abgetrennten zweiten Fraktion F₂₋₁ anhand der Partikelgröße in mindestens zwei Fraktionen F₁₋₂ (nicht dargestellt), F₂₋₂ unterteilt, wobei sich in einer ersten Fraktion F₁₋₂ mit einer kleinen Partikelgröße wenigstens eine hohe Konzentration an Verunreinigungen und sich in einer zweiten Fraktion F₂₋₂ mit einer großen Partikelgröße keine Verunreinigungen oder zumindest eine geringere Konzentration an Verunreinigungen als bei der ersten Fraktion F₁₋₂ anreichern. Somit trägt der zweite Sichterprozess dazu bei, dass in der zweiten Fraktion F₂₋₂ jeweils der Anteil an Sauerstoff auf 0,2 Gewichtsprozent, Kohlenstoff auf 0,02 Gewichtsprozent und Stickstoff auf 0,02 Gewichtsprozent verringert wird. Die Konzentration an Verunreinigungen konnten durch den zweiten Sichterprozess somit um zumindest ein Viertel und um die Hälfte verringert werden.

Um die Konzentration an Verunreinigungen weiter zu verringern, lassen sich beliebig oft Sichterprozesse durchführen, um anschließend eine Fraktion ohne Verunreinigungen oder mit einer geringen Konzentration an Verunreinigungen auszubilden, welche das Ausgangsmaterial AM zur Fertigung von Seltenerd-Magneten darstellt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- M: magnetisches Material
- ZP: pulverförmiges Zwischenprodukt
- F₁, F₁₋₁, F₁₋₂: erste Fraktion
- F₂, F₂₋₁, F₂₋₂: zweite Fraktion
- AM: Ausgangsmaterial

## Patentansprüche

1. Verfahren zur Herstellung eines pulverförmigen und zur Fertigung von Seltenerd-Magneten vorgesehenen Ausgangsmaterials (AM), umfassend die folgenden Schritte:
- Bereitstellen mindestens eines magnetischen Materials (M) und/oder mindestens einer Seltenerdmetall umfassenden Legierung, welche eine geringe Konzentration an Verunreinigungen umfassen,
- Zerkleinern des bereitgestellten mindestens einen magnetischen Materials (M) und/oder der bereitgestellten mindestens einen Seltenerdmetall umfassenden Legierung, wobei aus dem mindestens einen magnetischen Material (M) und/oder aus der mindestens einen Seltenerdmetall umfassenden Legierung ein pulverförmiges Zwischenprodukt (ZP) entsteht,
- Klassieren des pulverförmigen Zwischenprodukts (ZP) auf mindestens ein Kriterium, wobei zur Klassierung des pulverförmigen Zwischenprodukts (ZP) mindestens ein dynamische Sichter vorgesehen ist, welcher das pulverförmige Zwischenprodukt (ZP) mit Verunreinigungen anhand des mindestens einen Kriteriums in mindestens zwei Fraktionen (F₁, F₂) unterteilt,
- wobei sich in einer ersten Fraktion (F1) wenigstens eine hohe Konzentration an Verunreinigungen und sich in einer zweiten Fraktion (F2) keine Verunreinigungen oder zumindest eine geringere Konzentration an Verunreinigungen als bei der ersten Fraktion (F1) anreichern und die erste Fraktion (F1) mit einer hohen Konzentration an Verunreinigungen durch eine kleine Partikelgröße und die zweite Fraktion (F2) ohne Verunreinigungen oder mit einer geringen Konzentration an Verunreinigungen durch eine größere Partikelgröße als bei der ersten Fraktion (F1) gebildet werden,
- und wobei die Fraktion ohne Verunreinigungen oder mit einer geringen Konzentration an Verunreinigungen das Ausgangsmaterial (AM) zur Fertigung von Seltenerd-Magneten ausbildet,
- wobei eine Konzentration an Verunreinigungen von Sauerstoff im pulverförmigen Zwischenprodukt insbesondere zwischen 0,1 Gewichtsprozent und 1,2 Gewichtsprozent, von Stickstoff insbesondere zwischen 0,01 Gewichtsprozent und 0,15 Gewichtsprozent und von Kohlenstoff insbesondere zwischen 0,01 Gewichtsprozent und 0,20 Gewichtsprozent liegt,
- wobei die Konzentration an Verunreinigungen in der ersten Fraktion zwischen mindestens 0,02 Gewichtsprozent und höchstens 10,0 Gewichtsprozent liegt, und
- wobei die Konzentration an Verunreinigungen in der zweiten Fraktion bei maximal 1,0 Gewichtsprozent liegt.

2. Verfahren nach Anspruch 1, bei welchem die zweite Fraktion (F₂) ohne Verunreinigungen oder mit einer geringen Konzentration an Verunreinigungen, mehrmals durch den dynamischen Sichter klassiert und jeweils in mindestens zwei Fraktionen (F₁, F₂) unterteilt wird.

3. Verfahren nach Anspruch 1 oder Anspruch 2, bei welchem die Konzentration an Verunreinigungen der zweiten Fraktion (F₂) gegenüber der ersten Fraktion (F₁) durch Klassieren des pulverförmigen Zwischenprodukts (ZP) in die mindestens zwei Fraktionen (F₁, F₂) um wenigstens um ein Viertel bis wenigstens ein Dreiviertel oder mehr, wahlweise vollständig, verringert wird.

4. Verfahren nach einem der Ansprüche 1 bis 3, bei welchem das mindestens eine magnetische Material (M) und/oder die mindestens eine Seltenerdmetall umfassende Legierung derart zerkleinert wird, so dass es sich bei dem hergestellten pulverförmigen Zwischenprodukt (ZP) um ein Grobpulver oder um ein Feinpulver handelt.

5. Verfahren nach einem der Ansprüche 1 bis 4, bei welchem der mindestens eine dynamische Sichterprozess durch den dynamischen Sichter am Grobpulver oder am Feinpulver erfolgt.

6. Verfahren nach einem der voranstehenden Ansprüche, bei welchem die Konzentration an Verunreinigungen in der ersten Fraktion (F₁) von Sauerstoff zwischen 0,5 Gewichtsprozent und 8,0 Gewichtsprozent, von Stickstoff zwischen 0,05 Gewichtsprozent und 0,35 Gewichtsprozent und von Kohlenstoff zwischen 0,05 Gewichtsprozent und 0,35 Gewichtsprozent liegen.

7. Verfahren nach einem der voranstehenden Ansprüche, bei welchem der Anteil an Verunreinigungen in der zweiten Fraktion (F₂) von Sauerstoff bei größer als 0.01 Gewichtsprozent oder kleiner als 0,2 Gewichtsprozent, von Stickstoff bei größer als 0,01 Gewichtsprozent oder kleiner als 0,05 Gewichtsprozent und von Kohlenstoff bei größer als 0,01 Gewichtsprozent oder kleiner als 0,05 Gewichtsprozent liegen.

8. Verfahren nach Anspruch 7, wobei das Zerkleinern des mindestens einen magnetischen Materials (M) und/oder der mindestens einen Seltenerdmetall umfassenden Legierung durch einen Mahlvorgang oder durch mehrere Mahlvorgänge einer mechanischen Mahlanlage oder mit Hilfe von Wasserstofftechnik erfolgt.

9. Verfahren nach einem der voranstehenden Ansprüche, bei welchem dem mindestens einen dynamische Sichter mindestens ein Schutzgas zugeführt wird, so dass das pulverförmige Zwischenprodukt (ZP) unter Schutzgasatmosphäre in mindestens zwei Fraktionen (F₁, F₂) unterteilt wird.

10. Verfahren nach einem der voranstehenden Ansprüche, bei welchem dem bereitgestellten mindestens einen magnetischen Material (M) und/oder der bereitgestellten mindestens einen Seltenerdmetall umfassenden Legierung zeitlich vor oder während der Zerkleinerung wenigstens ein Hilfsstoff in festem, flüssigem oder gasförmigem Zustand zugeführt werden.

## Claims

1. A method used to produce a powdered starting material (AM) provided for the manufacture of rare earth magnets, the method comprising the following steps:
- supplying at least one magnetic material (M) and/or at least one alloy comprising rare earth metal, which magnetic material (M) or which alloy comprise a low concentration of impurities,
- comminuting the supplied at least one magnetic material (M) and/or the supplied at least one alloy comprising rare earth metal, wherein a powdered intermediate product (ZP) forms from the at least one magnetic material (M) and/or from the at least one alloy comprising rare earth metal,
- classifying the powdered intermediate product (ZP) according to at least one criterion, wherein at least one dynamic classifier is provided for the classification of the powdered intermediate product (ZP), which dynamic classifier divides the powdered intermediate product (ZP) with impurities into at least two fractions (F₁, F₂) on the basis of the at least one criterion,
- wherein at least a high concentration of impurities accumulates in a first fraction (F₁) and no impurities or at least a lower concentration of impurities than in the first fraction (F₁) accumulates in a second fraction (F₂), and wherein the first fraction (F₁) is formed with a high concentration of impurities by a small particle size and the second fraction (F₂) is formed without impurities or with a low concentration of impurities by a larger particle size than that in the first fraction (F₁),
- and wherein the fraction without impurities or with a low concentration of impurities forms the starting material (AM) for the production of rare earth magnets,
- wherein a concentration of impurities of oxygen in the powdered intermediate product is, in particular, between 0.1 per cent by weight and 1.2 per cent by weight, a concentration of impurities of nitrogen is, in particular, between 0.01 per cent by weight and 0.15 per cent by weight, and a concentration of impurities of carbon is, in particular, between 0.01 per cent by weight and 0.20 per cent by weight,
- wherein the concentration of impurities in the first fraction is between at least 0.02 per cent by weight and at most 10.0 per cent by weight, and
- wherein the concentration of impurities in the second fraction is a maximum of 1.0 per cent by weight.

2. The method according to claim 1, in which the second fraction (F₂) without impurities or with a low concentration of impurities is classified several times by the dynamic classifier and is in each case divided into at least two fractions (F₁, F₂).

3. The method according to claim 1 or claim 2, in which the concentration of impurities in the second fraction (F₂) is reduced relative to the first fraction (F₁) by at least one quarter to at least three quarters or more, or optionally completely, by classifying the powdered intermediate product (ZP) into the at least two fractions (F₁, F₂).

4. The method according to one of the claims 1 to 3, in which the at least one magnetic material (M) and/or the at least one alloy comprising rare earth metal is comminuted in such a manner that the powdered intermediate product (ZP) produced is a coarse powder or a fine powder.

5. The method according to one of the claims 1 to 4, in which the at least one dynamic classification process is carried out by the dynamic classifier on the coarse powder or on the fine powder.

6. The method according to one of the previous claims, in which the concentration of impurities of oxygen in the first fraction (F₁) is between 0.5 per cent by weight and 8.0 per cent by weight, the concentration of impurities of nitrogen is between 0.05 per cent by weight and 0.35 per cent by weight, and the concentration of impurities of carbon is between 0.05 per cent by weight and 0.35 per cent by weight.

7. The method according to one of the previous claims, in which the proportion of impurities of oxygen in the second fraction (F₂) is greater than 0.01 per cent by weight or less than 0.2 per cent by weight, the proportion of impurities of nitrogen is greater than 0.01 per cent by weight or less than 0.05 per cent by weight, and the proportion of impurities of carbon is greater than 0.01 per cent by weight or less than 0.05 per cent by weight.

8. The method according to claim 7, wherein the comminution of the at least one magnetic material (M) and/or of the at least one alloy comprising rare earth metal is carried out by one grinding operation or by a plurality of grinding operations performed by a mechanical grinding system or with the aid of hydrogen technology.

9. The method according to one of the previous claims, in which at least one inert gas is supplied to the at least one dynamic classifier such that the powdered intermediate product (ZP) is divided into at least two fractions (F₁, F₂) under an inert gas atmosphere.

10. The method according to one of the previous claims, in which at least one auxiliary material in a solid, liquid, or gaseous state is fed to the supplied at least one magnetic material (M) and/or to the supplied at least one alloy comprising rare earth metal temporally before or during the comminution.

## Revendications

1. Procédé de fabrication d'un matériau de départ (AM) pulvérulent et prévu pour la fabrication d'aimants aux terres rares, comprenant les étapes suivantes consistant à:
- fournir au moins un matériau magnétique (M) et/ou au moins un alliage comprenant de terre rare, qui présentent une faible concentration en impuretés,
- broyer ledit au moins un matériau magnétique (M) fourni et ledit au moins un alliage fourni comprenant de terre rare, dans lequel un produit intermédiaire (ZP) pulvérulent est formé à partir dudit au moins un matériau magnétique (M) et dudit au moins un alliage comprenant de terre rare,
- classer le produit intermédiaire (ZP) pulvérulent selon au moins un critère, dans lequel, pour classer le produit intermédiaire (ZP) pulvérulent, au moins un séparateur dynamique est prévu qui divise le produit intermédiaire (ZP) pulvérulent contenant des impuretés en au moins deux fractions (F₁, F₂) selon ledit au moins un critère,
- dans lequel dans une première fraction (F1) s'accumule au moins une concentration élevée d'impuretés et dans une deuxième fraction (F2) ne s'accumulent pas d'impuretés ou s'accumule au moins une concentration plus faible d'impuretés que dans la première fraction (F1) , et la première fraction (F1) présentant une concentration élevée d'impuretés est formée par une petite taille de particule et la deuxième fraction (F2) exempte d'impuretés ou présentant une faible concentration en impuretés est formée par une taille de particule plus importante que dans la première fraction (F1),
- et dans lequel la fraction exempte d'impuretés ou présentant une faible concentration en impuretés forme le matériau de départ (AM) pour la fabrication d'aimants aux terres rares,
- dans lequel une concentration en impuretés d'oxygène dans le produit intermédiaire pulvérulent est en particulier comprise entre 0,1 % en poids et 1,2 % en poids, celle d'azote est en particulier comprise entre 0,01 % en poids et 0,15 % en poids, et celle de carbone est en particulier comprise entre 0,01 % en poids et 0,20 % en poids,
- dans lequel la concentration en impuretés dans la première fraction est comprise entre au moins 0,02 % en poids et 10,0 % en poids tout au plus, et
- dans lequel la concentration en impuretés dans la deuxième fraction est de 1,0 % en poids au maximum.

2. Procédé selon la revendication 1, dans lequel la deuxième fraction (F₂) exempte d'impuretés ou présentant une faible concentration en impuretés, est classée à plusieurs reprises par le séparateur dynamique et est divisée à chaque fois en au moins deux fractions (F₁, F₂).

3. Procédé selon la revendication 1 ou 2, dans lequel la concentration en impuretés dans la deuxième fraction (F₂) est réduite par rapport à la première fraction (F₁), grâce au classement du produit intermédiaire pulvérulent (ZP) en au moins deux fractions (F₁, F₂), d'au moins un quart à au moins trois quarts ou plus, au choix totalement.

4. Procédé selon l'une quelconque des revendications 1 à 3, dans lequel ledit au moins un matériau magnétique (M) et/ou ledit au moins un alliage comprenant de terre rare est broyé de telle sorte que le produit intermédiaire pulvérulent (ZP) soit une poudre grossière ou une poudre fine.

5. Procédé selon l'une quelconque des revendications 1 à 4, dans lequel ledit au moins un processus de classification dynamique est mis en œuvre par le séparateur dynamique sur la poudre grossière ou la poudre fine.

6. Procédé selon l'une quelconque des revendications précédentes, dans lequel la concentration en impuretés, dans la première fraction (F₁) , d'oxygène est comprise entre 0,5 % en poids et 8,0 % en poids, celle d'azote est comprise entre 0,05 % en poids et 0,35 % en poids et celle de carbone est comprise entre 0,05 % en poids et 0,35 % en poids.

7. Procédé selon l'une quelconque des revendications précédentes, dans lequel la proportion d'impuretés, dans la deuxième fraction (F₂), d'oxygène est supérieure à 0,01 % en poids ou inférieure à 0,2 % en poids, celle d'azote est supérieure à 0,01 % en poids ou inférieure à 0,05 % en poids et celle de carbone est supérieure à 0,01 % en poids ou inférieure à 0,05 % en poids.

8. Procédé selon la revendication 7, dans lequel le broyage dudit au moins un matériau magnétique (M) et/ou dudit au moins un alliage comprenant de terre rare est réalisé par une opération de broyage ou par plusieurs opérations de broyage d'une installation de broyage mécanique ou à l'aide de la technologie de l'hydrogène.

9. Procédé selon l'une quelconque des revendications précédentes, dans lequel au moins un gaz protecteur est fourni audit au moins un séparateur dynamique, de sorte que le produit intermédiaire pulvérulent (ZP) est divisé en au moins deux fractions (F₁, F₂) sous atmosphère de gaz protecteur.

10. Procédé selon l'une quelconque des revendications précédentes, dans lequel au moins un matériau auxiliaire à l'état solide, liquide ou gazeux est amené avant ou pendant le broyage audit au moins un matériau magnétique (M) fourni et/ou audit au moins un alliage fourni comprenant de terre rare.
